# EUROPEAN PATENT SPECIFICATION

(11) **EP 2 702 753 B1**
(45) Date of publication and mention of the grant of the patent: **06.02.2019**
(21) Application number: 11722603.5
(22) Date of filing: 27.04.2011
(51) Int. Cl.: H04L 29/08, H04W 4/24, H04M 15/00, H04L 12/14

(54) **METHOD AND ARRANGEMENT FOR SUPPORTING CHARGING IN A COMMUNICATIONS NETWORK**
VERFAHREN UND ANORDNUNG ZUR UNTERSTÜTZUNG DER GEBÜHRENVERRECHNUNG IN EINEM KOMMUNIKATIONSNETZ
PROCÉDÉ ET AGENCEMENT PERMETTANT DE PRENDRE EN CHARGE UNE IMPUTATION DES COÛTS DANS UN RÉSEAU DE COMMUNICATION

(43) Date of publication of application: 05.03.2014
(73) Proprietor: Telefonaktiebolaget LM Ericsson (publ), 164 83 Stockholm (SE)
(72) Inventor: MÖLLERSTEN, David, S-371 31 Karlskrona (SE)
(74) Representative: Brann AB
(86) International application number: PCT/SE2011/050506
(87) International publication number: WO 2012/148326

(56) References cited:
- EP-A1- 2 009 840
- WO-A1-2009/117912
- WO-A2-03/094494
- CN-A- 101 247 656
- US-A1- 2005 136 889
- US-A1- 2010 279 653
- Martin Ljungberg, Aldo Bolle: "Mobile broadband secondwave differentiated offerings", Ericsson review , 1 January 2011 (2011-01-01), XP002666856, Retrieved from the Internet: URL:http://liveweb.archive.org/http://www. ericsson.com/res/thecompany/docs/publicati ons/ericsson_review/2011/er_mobile_broadba nd_2nd_wave.pdf [retrieved on 2012-01-11]
- Ericsson: "Differentiated Mobile Broadband", Ericsson White Paper , 30 January 2011 (2011-01-30), XP002666860, Retrieved from the Internet: URL:http://www.ericsson.com/res/docs/white papers/differentiated_mobile_broadband.pdf [retrieved on 2012-01-11]

## Description

### Technical field

The invention relates generally to a method and an arrangement for supporting charging for services used by devices in a communications network.

### Background

Today, network operators and other service providers are able to offer a multitude of different services to end-users in a communications network, which is possible as new emerging technologies allow for increased capacity and added functionality in the networks. Furthermore, increasingly advanced communication devices are frequently introduced on the market. Given the great range and variety of devices that are currently being used for communication, the recently developed, i.e. "modern" devices are generally more capable than older ones in terms of communication, processing and presentation. For example, some advanced services may be possible to execute properly by a modern communication device having sufficient capabilities and functionality, while the same services may be more troublesome and even impossible to execute by more "old-fashioned" or plain devices not having the needed capabilities and functionality.

As a result, the users of such plain devices are inclined to stick to a very limited selection of less advanced and more traditional communication services such as voice calling and SMS (Short Message Services), while more demanding services such as internet browsing, online gaming and communication of audio and visual content, are virtually out of the question. Another example is that large amounts of communicated data can be handled with less delays by modern devices and vice versa, such that users of dated devices may avoid services involving large amounts of data due to the resulting quality deterioration. Users of dated devices are generally reluctant to use any services in the communication network more than necessary due to various shortcomings and lack of functionality in their devices.

Network operators would thus generally gain by revenue from increased service usage and network traffic if those users would exchange their dated and/or plain devices for more modern and sophisticated ones, which in turn would make the more advanced services more attractive and useful. For similar reasons, providers of content such as films and music find it hard to increase their customer base unless the number of users of modern devices can be increased. The Internet Engineering Task Force specifies in RFC 4006 a Diameter application that can be used to implement real-time credit-control for a variety of end user services such as network access, Session Initiation Protocol (SIP) services, messaging services, and download services. US 2005/136889 A1 describes a method of flexible rating differentiation of service usage in a communication system. Further, US 2010/279653 A1 describes a method to improve communication quality and security of transmission in cellular communication networks.

Moreover, it has been identified as a problem in communication networks that an old communication device may have relatively poor or defective components such that messages and signals are difficult to get across properly over the network and may require much "overhead" signalling and processing to compensate for errors and other shortcomings that may occur as a result, also causing delays and low throughput, which could be avoided or at least reduced by using a more modern device. Such excessive signalling, e.g. retransmissions and correction of erroneously received data, naturally results in undue load on network bandwidth and processing resources. A dated wireless device may further require relatively high signal power in order to receive and decode signals properly, due to poor reception equipment, thus causing undue interference in the wireless network.

### Summary

It is an object of the invention to address at least some of the problems and issues outlined above. It is possible to achieve these objects and others by using a method and an arrangement as defined in the attached independent claims. Therefore the present invention is defined in the attached independent claims. Further, preferred embodiments may be found in the dependent claims appended thereto.

According to one aspect, a method is provided in a charging function for supporting charging for services in a communications network. In this method, the charging function first receives a request for charging information from a session
control node serving a communication device in the network. The received request refers to a service requested or consumed by the device. The charging function determines at least one characteristic of the device, and sets a charging level for the requested or consumed service pertaining to the device, based on the determined at least one characteristic of the device. The charging level is set by using a predefined look-up table that specifies different charging levels for different services used by the communication device having the at least one characteristic. The charging function then sends a response to the charging information request to the session control node based on the set charging level, to enable device characteristic dependent charging for the requested or consumed service.

According to another aspect, an arrangement is provided in a charging function configured to support charging for services in a communications network. The charging function arrangement comprises a receiving module adapted to receive a request for charging information from a session control node serving a communication device in the network, the request referring to a service requested or consumed by the device. The charging function arrangement also comprises a rating module adapted to determine at least one characteristic of the device, and to set a charging level for the requested or consumed service pertaining to the device, based on the determined at least one characteristic of the device. The rating module is further adapted to set the charging level by using a predefined look-up table that specifies different charging levels for different services used by the communication device having the at least one characteristic. The charging function arrangement also comprises a sending module adapted to send a response to the received charging information request to the session control node based on the set charging level, to enable device characteristic dependent charging for the requested or consumed service.

The above method and arrangement may be configured and implemented according to different optional embodiments. In some possible embodiments, the at least one characteristic of the device may indicate one or more of: abilities for communicating data, abilities for presenting the service to a user of the device, device type, device capabilities, device model, model type, device manufacturer, operative system OS, and OS version. The device capabilities may further pertain to any of: communication protocols, installed applications, encoding and decoding scheme, storing capacity, processing capacity, display, camera, and audio system.

In another possible embodiment, the received request for charging information includes a CDR (Call Data Record) generated after the service has been consumed by the device. Alternatively, the request for charging information may be received once the device has made a service request to the session control node.

In further possible examples, the charging function may fetch the at least one characteristic of the device from a device characteristics repository associated with the network, or may retrieve it from a local cache in the charging function used for storing device characteristics. If the known Diameter protocol is used, the request for charging information can be received in a credit control request according to the Diameter protocol and the response can be sent in a credit control answer according to the Diameter protocol.

Further possible features and benefits of this solution will become apparent from the detailed description below.

### Brief description of drawings

The invention will now be described in more detail by means of exemplifying embodiments and with reference to the accompanying drawings, in which:
Fig 1 is a block diagram illustrating how charging of services in a network can be supported by means of a charging function, according to some possible embodiments.
Fig. 2 is a flow chart illustrating a procedure in a charging function for supporting charging of services, according to further possible embodiments.
Fig 3 is a schematic diagram illustrating how different charging levels can be determined, according to further possible embodiments.
Fig. 4 is a block diagram illustrating in more detail an example of a charging function in operation, according to further possible embodiments.

### Detailed description

Briefly described, a solution is provided to enable differentiated charging for services when used by individual communication devices, so that it is possible to encourage the use of modern and/or advanced devices rather than old and
plain ones that may be associated with problems for both the device user and his network operator. This is accomplished by setting a charging level for the service used by a particular device based on at least one characteristic of that device.

The communication devices of today include anything from advanced user equipments with many functions and great computer capacity, to very simple so-called "M2M" (Machine-to-Machine) devices e.g. configured to automatically provide status reports or measurements to a central enterprise. In either case, a modern up-to-date device is to be preferred over an old and dated one from the network's view since the former is typically able to communicate more efficiently in terms of overhead, retransmissions, interference, throughput, and so forth. This solution also makes it possible to influence the users' choice of device and consumption of services in the network in a positive manner. In this description, the term "device" is used for short to represent any communication entity capable of using services in a communications network, e.g. mobile telephones, computers, M2M devices, etc.

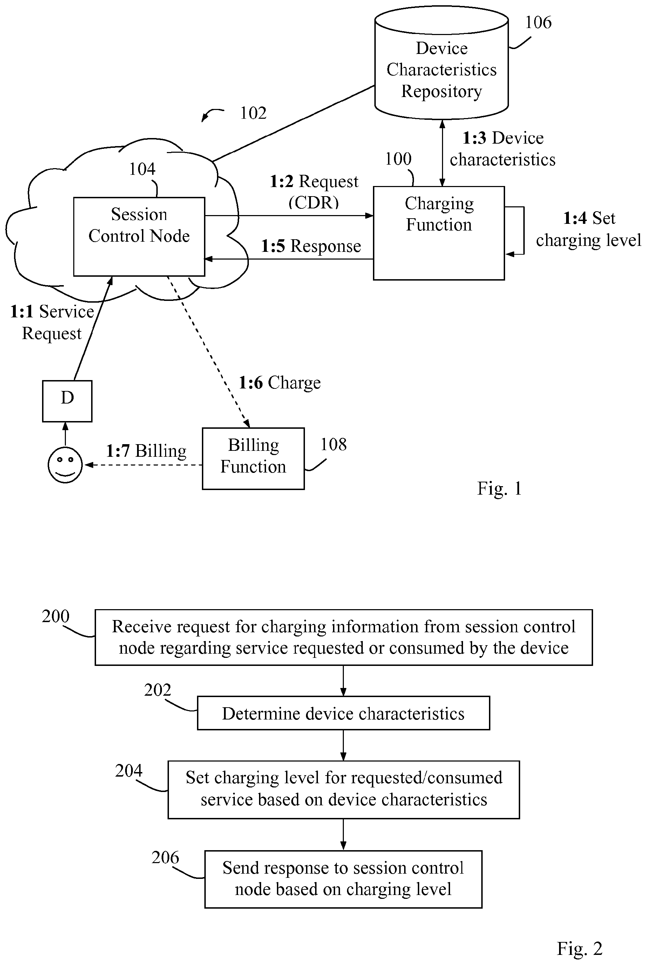

With reference to a communication scenario illustrated in Fig. 1, an example will now be described of how charging for services, when used by a device D in a communications network 102, can be supported by means of a charging function 100 in accordance with this solution. The device D is owned and controlled by a user and may in this scenario, without limitation, be any type of device, e.g. modern or dated, having certain characteristics pertaining to various abilities and functions of the device. Such characteristics are detailed for multiple devices in the network and maintained in a "device characteristics repository" 106 accessible for the charging function 100. The process as such of collecting device characteristics in the repository 106 is somewhat outside this solution and is therefore not necessary to describe in further detail to understand the solution.

In this example, device D is connected to the network 102 for generally executing communications, sometimes also referred to as sessions, controlled or supervised by a session control node 104 in the network 102, which may be a gateway, a call session control function CSCF, a server etc. depending on the type of network, access technology and communication protocols used. The network is thus used by devices when consuming services and may be a wireless or fixed network.

The session control node 104 may also provide notifications to the charging function 100 regarding the services consumed by devices when communicating in network 102. These notifications typically include regular CDRs (Call Data Records) or similar messages, generated after a service has been consumed by a communication device, which is common practice in communication networks. The charging function 100 normally determines a charging rate for the consumed service based on various factors such as the user's subscription, type of service, time of day and week, session duration, amount of communicated data, and so forth, and sends the charging rate to the session control node 104 that finally instructs a billing function 108 to send a bill to the user accordingly. This novel solution further enables device characteristic dependent charging for services as follows.

An **action 1:1** illustrates that the device D issues a service request to network 102, which is received and handled by the session control node 104 for executing the requested service for the device D. The service request may be initiated manually by the user or automatically by the device. At some point, e.g. after the service has been executed, the session control node 104 sends a request for charging information on the device to the charging function 100, in a further **action 1:2,** the request thus referring to the device. For example, the request for charging information may be a regular so-called credit control request (CCR) for the device according to the known Diameter protocol, although the invention is not limited to any particular type of message for conveying the charging information request to the charging function. In one optional embodiment, the request for charging information may also include a CDR generated after the service has been consumed by the device D. The request of action 1:2 may be triggered in node 104 either by the service request of action 1:1 or after completion of the requested service.

The charging function 100 then fetches at least one characteristic of the device D from the device characteristics repository 106, in a further **action 1:3.** This particular device D is thus identified in the charging information request and its characteristics can then be fetched accordingly. Alternatively, the characteristics of the device may be determined by retrieving them from a local cache, not shown, in the charging function 100 used for storing device characteristics, if available. The charging function 100 may first check if any characteristic of the device is available from the local cache, and if not, fetch it from the repository 106. The charging function 100 may thus be configured to store device characteristics in its local cache for a preset limited duration in support of this solution, after fetching them from the repository 106.

By way of a few examples, the at least one characteristic of the device D may indicate its abilities for communicating data, and/or its abilities for presenting the service to the device user. In more detail, the at least one characteristic of the device D may further indicate a device type, device capabilities, device model, model type, device manufacturer, operative system "OS", and/or OS version. In this context, device capabilities may pertain to communication protocols, installed applications, encoding and decoding schemes, storing capacity, processing capacity, display, camera, audio system, etc. The present solution is not limited to any particular device characteristic or set of device characteristics.

A next **action 1:4** illustrates that the charging function 100 sets a charging level for the requested or consumed service, based on the fetched or retrieved at least one characteristic of the device D, and the charging level can be used for determining the amount to be billed to the device user for the service. In this context, different charging levels may have been predefined as implicit classes or the like, e.g. "low", "medium", "high", etc., or as numeral levels 1, 2, 3, ... Alternatively, the charging level could be set as an explicit monetary amount, e.g. by using an algorithm or the like with the determined at least one device characteristic as input. It should be noted that the charging function 100 may of course take other more conventional factors into account as well when determining the resulting amount to be charged for the service, such as the user's subscription, type of service, time of day and week, session duration, amount of communicated data, and so forth, which are however outside the scope of this solution as such.

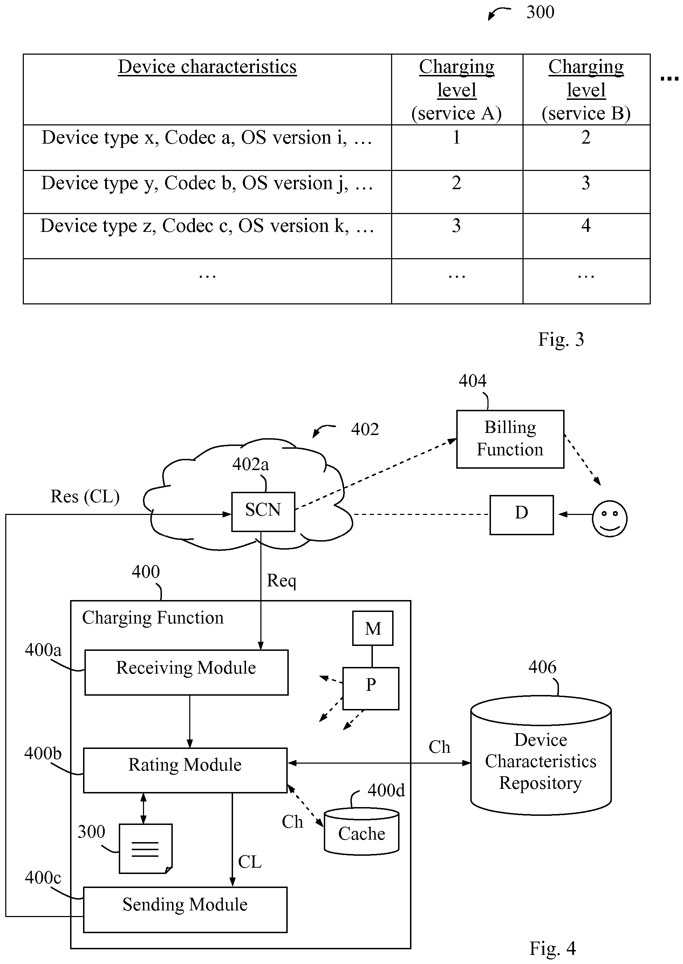

In this way, it is possible to differentiate the charged amount for a particular service depending on the abilities and functions in the device, e.g. depending on whether a modern advanced device or a dated plain one is used. In this action, the charging function 100 may use a predefined look-up table or the like which maps different device characteristics to different charging levels, which will be described in more detail later with reference to an example shown in Fig. 3.

Having set an appropriate charging level for the service as requested or consumed by that particular device, the charging function 100 sends a response to the charging information request of action 1:2 to the session control node 104 based on the set charging level, in a further **action 1:5.** For example, this response may be a credit control answer CCA according to the Diameter protocol and may thus indicate the set charging level in a suitable manner. Thereby, the session control node 104 is able to instruct the billing function 108, shown in a further **action 1:6,** to charge the device user according to the set charging level and issue a bill to the device user or deduct the charged amount from a user account, depending on the subscription, in a final shown **action 1:7.** In this context, the term "billing" represents any mechanism or practice for charging the user for the service.

A procedure for supporting the charging for services in a communications network, will now be described with reference to Fig.2. This procedure includes various actions that may be executed by a charging function associated with the network, such as the charging function 100 shown in Fig. 1, in support of charging a communication device for services, such as device D in Fig. 1.

In a first **action 200,** the charging function receives a request for charging information from a session control node serving the device in the network, the request referring to a service requested or consumed by the device, basically corresponding to action 1:2 in Fig. 1. The session control node may send the charging information request upon receiving a service request from the device or upon completion of a service executed for the device. The charging function then determines at least one characteristic of the device, in a next **action 202,** e.g. by fetching this data from an external repository, basically corresponding to action 1:3 in Fig. 1, or by retrieving it from a local cache. In this action, any type or number of device characteristics may be fetched or retrieved, such as exemplified above.

In a further **action 204,** the charging function sets a charging level for the requested or consumed service pertaining to the device, based on the above determined at least one characteristic of the device, basically corresponding to action 1:4 in Fig. 1. As described above, the charging level may be set by checking the determined at least one characteristic of the device in a look-up table or the like with different device characteristics mapped to different charging levels. The charging level may be specified as an implicit class from which the actual amount can be determined, taking other factors into account as well, such as subscription, service type, session duration, etc., to be billed for the service. Finally, the charging function sends a response to the request for charging information to the session control node based on the set charging level, in an **action 206,** basically corresponding to action 1:5 in Fig. 1. The response thus indicates the set charging level in a suitable manner, depending on the implementation. Thereby, the session control node is enabled to implement device characteristic dependent charging for the requested or consumed service, e.g. in an instruction to a billing function or the like, such that the device user will be charged according to the set charging level.

As mentioned above, the charging function may use a predefined look-up table with different device characteristics mapped to different charging levels, when determining a fitting charging level for different devices. An example of such a look-up table is schematically illustrated Fig 3. In this example, the look-up table 300 comprises a first column with different device characteristics and at least two further columns with charging levels for different services mapped to the device characteristics in the first column. For example, if the device characteristics for a particular device have been determined to include one or more of: a device type "y", a codec "b" and an OS version "j", etc., the charging function can determine that a charging level "2" should be applied when the device uses a particular service "A", and so forth. Different services A, B, ... may thus result in different charging levels for a given device characteristic, or the same charging level may alternatively be translated into different amounts for different services.

A more simplified example of a look-up table, not shown, might consider only one pertinent device characteristic, e.g. device types which could be listed in the first column alone. As mentioned above, this solution may be used for any number or type(s) of device characteristics and any suitable disposition of columns and services in the look-up table may be used without limiting the invention. The determined charging level could then be used by the billing function to calculate the actual amount to charge the user, also taking other factors into account as said above.

A detailed but non-limiting example of how an arrangement can be implemented in a charging function 400 to accomplish the above-described solution, is illustrated by the block diagram in Fig. 4. The charging function 400 is thus configured to support charging for services in a communications network 402, e.g. in the manner described above for any of Figs 1 - 3.

The arrangement in the charging function 400 comprises a **first receiving module 400a** adapted to receive a request "Req" for charging information from a session control node 402a serving a communication device D in the network 402, the request referring to a service requested or consumed by the device D. The arrangement in charging function 400 further comprises a **rating module 400b** adapted to determine at least one characteristic "Ch" of the device, and to set a charging level "CL" for the service requested or consumed by the device, based on the determined at least one characteristic of the device. The arrangement further comprises a **sending module 400c** adapted to send a response "Res" to the request Req to the session control node 402a based on the set charging level CL. The session control node 402a is thereby enabled to use the charging level CL, e.g. in a suitable instruction to a billing function 404 of the network 402, for charging the device user such that device characteristic dependent charging is employed for the requested or consumed service.

It should be noted that Fig. 4 merely illustrates various functional modules or units in the charging function 400 in a logical sense, although the skilled person is free to implement these functions in practice using suitable software and hardware means. Thus, this aspect of the solution is generally not limited to the shown structures of the charging function 400, while their functional modules 400a - 400c may be configured to operate according to the features described for any of Figs 1 - 3 above, where appropriate.

The functional modules 400a - 400c described above can be implemented in the charging function 400 as program modules of a respective computer program comprising code means which, when run by a processor "P" in the charging function 400 causes the function 400 to perform the above-described actions. The processor P may be a single CPU (Central processing unit), or could comprise two or more processing units. For example, the processor P may include general purpose microprocessors, instruction set processors and/or related chips sets and/or special purpose microprocessors such as ASICs (Application Specific Integrated Circuit). The processor P may also comprise a storage for caching purposes.

The computer program may be carried by a computer program product in the charging function 400 in the form of a memory "M" connected to the processor P. The computer program product or memory M comprises a computer readable medium on which the computer program is stored. For example, the memory M may be a flash memory, a RAM (Random-access memory), a ROM (Read-Only Memory) or an EEPROM (Electrically Erasable Programmable ROM), and the program modules could in alternative embodiments be distributed on different computer program products in the form of memories within the charging function 400.

The above charging function 400 and functional modules 400a - 400c may be configured or adapted to operate according to various optional embodiments. For example, in some possible examples, the rating module 400b may be adapted to determine the at least one device characteristic by fetching it from a device characteristics repository 406 associated with the communications network, or by retrieving it from a local cache 400d in the charging function 400 used for storing device characteristics.

The rating module 400b may be further adapted to set the charging level by using a predefined look-up table 300 which maps different device characteristics to different charging levels, e.g. in the manner described above for Fig. 3. In further possible embodiments, the receiving module 400a may also be adapted to receive the request for charging information in a credit control request according to the above-mentioned Diameter protocol, and the sending module 400c may also be adapted to send the response in a credit control answer according to the Diameter protocol.

By using the solution as described above with reference to various embodiments, it is possible to choose a more attractive charging when services are consumed by using well-functioning devices rather than dated and potentially taxing ones, based on the device characteristics. This can in turn be used to encourage users to switch to the more modern devices, and the number of devices with poor or defective components can be reduced in the network. The amount of overhead signalling, processing, error compensation, delays, radio interference and load on network bandwidth can thereby also be avoided or at least reduced.

While the invention has been described with reference to specific exemplary embodiments, the description is generally only intended to illustrate the inventive concept and should not be taken as limiting the scope of the invention. For example, the terms "charging function", "billing function", "device characteristics", "device characteristics repository", "session control node", "request for charging information", and "look-up table" have been used throughout this description, although any other corresponding nodes, functions, and/or parameters could also be used having the features and characteristics described here. The invention is defined by the appended claims.

## Claims

1. A method in a charging function (100) for supporting charging for services in a communications network (102), the method comprising:
- receiving (1:2a, 200) a request for charging information from a session control node (104) serving a communication device (D) in the communications network (102), the request referring to a service requested or consumed by the communication device (D),
- determining (1:3, 202) at least one capability (Ca) of said communication device (D) by fetching at least one characteristic of said communication device (D) from a device characteristics repository (106) associated with the communications network (102),
- setting (1:4, 204) a charging level (CL) for the requested or consumed service pertaining to the communication device (D), based on said at least one capability (Ca) of the communication device (D), wherein the charging level (CL) for the requested or consumed service pertaining to the communication device (D) is set by using a predefined look-up table (300) that specifies different charging levels for different services used by said communication device (D) having said at least one capability (Ca), and
- sending (1:5, 206) a response to said request to the session control node (104) based on said set charging level (CL), to enable device capability (Ca) dependent charging for the requested or consumed service.

2. The method according to claim 1, wherein said device capability (Ca) pertain to any of: communication protocols, installed applications, encoding and decoding schemes, storing capacity, processing capacity, display, camera, and audio system.

3. The method according to any of claims 1-2, wherein said request for charging information includes a CDR (Call Data Record) generated after the service has been consumed by the communication device (D).

4. The method according to any of claims 1-2, wherein said request for charging information is received when the communication device (D) has made a service request (1:1) to said session control node (104).

5. The method according to any of claims 1-4, wherein the at least one capability (Ca) of said communication device (D) is retrieved from a local cache (400d) in the charging function (100) used for storing device capability (Ca).

6. The method according to any of claims 1-5, wherein said request for charging information is received in a credit control request according to a Diameter protocol and said response is sent in a credit control answer according to the Diameter protocol.

7. An arrangement in a charging function (400) configured to support charging for services in a communications network (402), comprising:
- a receiving module (400a) adapted to receive a request for charging information from a session control node (402a) serving a communication device (D) in the communications network (402), the request referring to a service requested or consumed by the communication device (D),
- a rating module (400b) adapted to determine at least one capability (Ca) of said communication device (D) by fetching at least one device characteristic from a device characteristics repository (106) associated with the communications network (402), and to set a charging level (CL) for the requested or consumed service pertaining to the communication device (D), based on said at least one capability (Ca) of the communication device (D), wherein the rating module (400b) is adapted to set the charging level (CL) by using a predefined look-up table (300) that specifies different charging levels for different services used by said communication device (D) having said at least one capability (Ca), and
- a sending module (400c) adapted to send a response to said request to the session control node (402a) based on said set charging level (CL), to enable device capability (Ca) dependent charging for the requested or consumed service.

8. The arrangement according to claim 7, wherein said device capability (Ca) pertain to any of: communication protocols, installed applications, encoding and decoding schemes, storing capacity, processing capacity, display, camera, and audio system.

9. The arrangement according to any of claims 7-8, wherein said request for charging information includes a CDR (Call Data Record) generated after the service has been consumed by the communication device (D).

10. The arrangement according to any of claims 7-9, wherein the rating module (400b) is further adapted to determine said at least one device capability (Ca) by retrieving it from a local cache (400d) in the charging function (400) used for storing device capabilities.

11. The arrangement according to any of claims 8-10, wherein the receiving module (400a) is further adapted to receive said request for charging information in a credit control request according to a Diameter protocol, and the sending module (400c) is further adapted to send said response in a credit control answer according to the Diameter protocol.

## Patentansprüche

1. Verfahren in einem Gebührenverrechnungsablauf (100) zum Unterstützen der Gebührenverrechnung für Dienste in einem Kommunikationsnetz (102), wobei das Verfahren umfasst:
- Empfangen (1: 2a, 200) einer Anfrage nach Gebührenverrechnungsinformationen von einem Sitzungssteuerknoten (104), der einer Kommunikationsvorrichtung (D) in dem Kommunikationsnetz (102) dient, wobei sich die Anfrage auf einen Dienst bezieht, der von der Kommunikationsvorrichtung (D) angefordert oder in Anspruch genommen wurde,
- Bestimmen (1:3,202) von mindestens einer Einsatzmöglichkeit (Ca) der Kommunikationsvorrichtung (D) durch Abrufen von mindestens einer Eigenschaft der Kommunikationsvorrichtung (D) aus einem mit dem Kommunikationsnetz (102) verknüpften Vorrichtungsmerkmal-Speicher (106),
- Einstellen (1:4, 204) eines Gebührenverrechnungslevels (CL) für den angeforderten oder in Anspruch genommenen Dienst in Bezug auf die Kommunikationsvorrichtung (D), basierend auf der mindestens einen Einsatzmöglichkeit (Ca) der Kommunikationsvorrichtung (D), wobei der Gebührenverrechnungslevel (CL) für den angeforderten oder in Anspruch genommenen Dienst, der zu der Kommunikationsvorrichtung (D) gehört, eingestellt wird, indem eine vordefinierte Nachschlagetabelle (300) verwendet wird, die unterschiedliche Gebührenverrechnungslevel für verschiedene Dienste angibt, die von der Kommunikationsvorrichtung (D) verwendet werden, die die mindestens eine Einsatzmöglichkeit aufweist (Ca) und
- Senden (1:5,206) einer Antwort auf die Anfrage an den Sitz-ungssteuerknoten (104) basierend auf dem eingestellten Gebührenverrechnungslevel (CL), um eine von der Vorrichtungseinsatzmöglichkeit (Ca) abhängige Gebührenverrechnung für den angeforderten oder konsumierten Dienst zu ermöglichen.

2. Verfahren nach Anspruch 1, wobei die Vorrichtungseinsatzmöglichkeit (Ca) eine der folgenden ist:
Kommunikationsprotokolle, installierte Anwendungen, Kodierungs- und Dekodierungsschemata, Speicherkapazität, Verarbeitungskapazität, Anzeige, Kamera und Audiosystem.

3. Verfahren nach einem der Ansprüche 1 bis 2, wobei die Anfrage zum Abrufen von Gebührenverrechnungsinformationen eine CDR (Call Data Record) enthält, die erzeugt wird, nachdem der Dienst von der Kommunikationsvorrichtung (D) in Anspruch genommen wurde.

4. Verfahren nach einem der Ansprüche 1 bis 2, wobei die Anfrage nach Gebührenverrechnungsinformationen empfangen wird, wenn die Kommunikationsvorrichtung (D) eine Serviceanfrage (1:1) an den Sitzungssteuerknoten (104) gestellt hat.

5. Verfahren nach einem der Ansprüche 1 bis 4, wobei die mindestens eine Einsatzmöglichkeit (Ca) der Kommunikationsvorrichtung (D) aus einem lokalen Cache (400d) im Gebührenverrechnungsablauf (100) abgerufen wird, der zum Speichern der Vorrichtungseinsatzmöglichkeit (Ca) verwendet wird.

6. Verfahren nach einem der Ansprüche 1 bis 5, wobei die Anfrage nach Gebührenverrechnungsinformationen in einer Kreditkontrollanfrage gemäß einem Diameter-Protokoll empfangen wird und die Antwort in einer Kreditkontrollantwort gemäß dem Diameter-Protokoll gesendet wird.

7. Anordnung in einem Gebührenverrechnungsablauf (400), ausgelegt zur Unterstützung der Gebührenverrechnung für Dienste in einem Kommunikationsnetz (402), umfassend:
- ein Empfangsmodul (400a), das eingerichtet ist, um eine Anfrage nach Gebührenverrechnungsinformationen von einem Sitzungssteuerknoten (402a) zu empfangen, der eine Kommunikationsvorrichtung (D) im Kommunikationsnetz (402) bedient, wobei die Anfrage auf einen von der Kommunikationsvorrichtung angeforderten oder konsumierten Dienst verweist (D),
- ein Bewertungsmodul (400b), das eingerichtet ist, mindestens eine Einsatzmöglichkeit (Ca) der Kommunikationsvorrichtung (D) durch Abrufen mindestens einer Vorrichtungseigenschaft aus einem dem Kommunikationsnetz (402) zugeordneten Vorrichtungsmerkmal-Speicher (106) zu ermitteln und einen Gebührenverrechnungslevel (CL) für den angeforderten oder in Anspruch genommenen Dienst der Kommunikationsvorrichtung (D) einzustellen, basierend auf der mindestens einen Einsatzmöglichkeit (Ca) der Kommunikationsvorrichtung (D), wobei das Bewertungsmodul (400b) dazu eingerichtet ist, den Gebührenverrechnungslevel (CL) unter Verwendung einer vordefinierten Nachschlagetabelle (300) einzustellen, die unterschiedliche Gebührenverrechnungslevel für verschiedene Dienste angibt, die von der Kommunikationsvorrichtung (D) mit der mindestens einen Einsatzmöglichkeit (Ca) verwendet werden, und
- ein Sendemodul (400c), das zum Senden einer Antwort auf die Anfrage an den Sitzungssteuerknoten (402a) basierend auf dem eingestellten Gebührenverrechnungslevel (CL) eingerichtet ist, um eine von der Vorrichtungseinsatzmöglichkeit (Ca) abhängige Gebührenverrechnung für den angeforderten oder konsumierten Dienst zu ermöglichen.

8. Anordnung nach Anspruch 7, wobei sich die Vorrichtungseinsatzmöglichkeit (Ca) auf eine der folgenden bezieht: Kommunikationsprotokolle, installierte Anwendungen, Codierungs- und Decodierungsschemata, Speicherkapazität, Verarbeitungskapazität, Anzeige, Kamera und Audiosystem.

9. Anordnung nach einem der Ansprüche 7 bis 8, wobei die Anfrage nach Gebührenverrechnungsinformationen eine CDR (Call-Data-Record) erzeugt, nachdem der Dienst von der Kommunikationsvorrichtung (D) in Anspruch genommen wurde.

10. Anordnung nach einem der Ansprüche 7 bis 9, wobei das Bewertungsmodul (400b) ferner dazu eingerichtet ist, die mindestens eine Vorrichtungseinsatzmöglichkeit (Ca) durch Abrufen aus einem lokalen Cache (400d) in dem verwendeten Gebührenverrechnungsablauf (400) zur Speicherung von Vorrichtungseinsatzmöglichkeiten zu ermitteln.

11. Anordnung nach einem der Ansprüche 8 bis 10, wobei das Empfangsmodul (400a) des Weiteren dazu geeignet ist, die Anfrage nach Gebührenverrechnungsinformationen in einer Kreditkontrollanfrage gemäß einem Diameter-Protokoll zu empfangen, und das Sendemodul (400c) ferner dazu geeignet ist, die Antwort in einer Kreditkontrollantwort gemäß dem Diameter-Protokoll zu senden.

## Revendications

1. Procédé dans une fonction d'imputation des coûts (100) permettant de prendre en charge une imputation des coûts pour des services dans un réseau de communication (102), le procédé comprenant :
- la réception (1:2a, 200) d'une demande d'informations sur l'imputation des coûts provenant d'un noeud de contrôle de session (104) desservant un dispositif de communication (D) dans le réseau de communication (102), la demande se référant à un service demandé ou consommé par le dispositif de communication (D),
- la détermination (1:3, 202) d'au moins une capacité (Ca) dudit dispositif de communication (D) en extrayant au moins une caractéristique dudit dispositif de communication (D) d'un dépôt de caractéristiques de dispositif (106) associé au réseau de communication (102),
- la définition (1:4, 204) d'un niveau d'imputation des coûts (CL) pour le service demandé ou consommé se rapportant au dispositif de communication (D), sur la base de ladite au moins une capacité (Ca) du dispositif de communication (D), dans lequel le niveau d'imputation des coûts (CL) pour le service demandé ou consommé se rapportant au dispositif de communication (D) est défini en utilisant une table de recherche prédéfinie (300) qui spécifie des niveaux d'imputation des coûts différents pour des services différents utilisés par ledit dispositif de communication (D) ayant ladite au moins une capacité (Ca), et
- l'envoi (1:5, 206) d'une réponse à ladite demande au noeud de contrôle de session (104) sur la base dudit niveau d'imputation des coûts (CL) défini, pour permettre à une capacité de dispositif (Ca) dépendante d'imputer des coûts pour le service demandé ou consommé.

2. Procédé selon la revendication 1, dans lequel ladite capacité de dispositif (Ca) se rapporte à l'un quelconque de : protocoles de communication, applications installées, plans de codage et de décodage, capacité de stockage, capacité de traitement, affichage, caméra et système audio.

3. Procédé selon l'une quelconque des revendications 1 et 2, dans lequel ladite demande d'informations sur l'imputation des coûts comprend un CDR (registre de données d'appel) généré après que le service a été consommé par le dispositif de communication (D).

4. Procédé selon l'une quelconque des revendications 1 et 2, dans lequel ladite demande d'informations sur l'imputation des coûts est reçue lorsque le dispositif de communication (D) a effectué une demande de service (1:1) audit noeud de contrôle de session (104).

5. Procédé selon l'une quelconque des revendications 1 à 4, dans lequel l'au moins une capacité (Ca) dudit dispositif de communication (D) est récupérée à partir d'un cache local (400d) dans la fonction d'imputation des coûts (100) utilisée pour stocker une capacité de dispositif (Ca).

6. Procédé selon l'une quelconque des revendications 1 à 5, dans lequel ladite demande d'informations sur l'imputation des coûts est reçue dans une demande de contrôle de crédit conformément à un protocole Diameter et ladite réponse est envoyée dans une réponse de contrôle de crédit conformément au protocole Diameter.

7. Agencement dans une fonction d'imputation des coûts (400) configuré pour prendre en charge une imputation des coûts pour des services dans un réseau de communication (402), comprenant :
- un module de réception (400a) conçu pour recevoir une demande d'informations sur l'imputation des coûts provenant d'un noeud de contrôle de session (402a) desservant un dispositif de communication (D) dans le réseau de communication (402), la demande se référant à un service demandé ou consommé par le dispositif de communication (D),
- un module d'évaluation (400b) conçu pour déterminer au moins une capacité (Ca) dudit dispositif de communication (D) en extrayant au moins une caractéristique d'un dépôt de caractéristiques de dispositif (106) associé au réseau de communication (402), et pour définir un niveau d'imputation des coûts (CL) pour le service demandé ou consommé relevant du dispositif de communication (D), sur la base de ladite au moins une capacité (Ca) du dispositif de communication (D), dans lequel le module d'évaluation (400b) est conçu pour définir le niveau d'imputation des coûts (CL) en utilisant une table de recherche prédéfinie (300) qui spécifie des niveaux d'imputation des coûts différents pour des services différents utilisés par ledit dispositif de communication (D) ayant ladite au moins une capacité (Ca), et
- un module d'envoi (400c) conçu pour envoyer une réponse à ladite demande au noeud de contrôle de session (402a) sur la base dudit niveau d'imputation des coûts (CL) défini, pour permettre à une capacité de dispositif (Ca) dépendante d'imputer des coûts pour le service demandé ou consommé.

8. Agencement selon la revendication 7, dans lequel ladite capacité de dispositif (Ca) se rapporte à l'un quelconque de : protocoles de communication, applications installées, plans de codage et de décodage, capacité de stockage, capacité de traitement, affichage, caméra et système audio.

9. Agencement selon l'une quelconque des revendications 7 et 8, dans lequel ladite demande d'informations sur l'imputation des coûts comprend un CDR (registre de données d'appel) généré après que le service a été consommé par le dispositif de communication (D).

10. Agencement selon l'une quelconque des revendications 7 à 9, dans lequel le module d'évaluation (400b) est en outre conçu pour déterminer ladite au moins une capacité de dispositif (Ca) en la récupérant à partir d'un cache local (400d) dans la fonction d'imputation des coûts (400) utilisée pour stocker des capacités de dispositif (Ca).

11. Agencement selon l'une quelconque des revendications 8 à 10, dans lequel le module de réception (400a) est en outre conçu pour recevoir ladite demande d'informations sur l'imputation des coûts dans une demande de contrôle de crédit conformément à un protocole Diameter, et le module d'envoi (400c) est en outre conçu pour envoyer ladite réponse dans une réponse de contrôle de crédit conformément au protocole Diameter.
